# EUROPEAN PATENT APPLICATION

(11) **EP 3 065 313 A1**
(43) Date of publication of application: **07.09.2016**
(21) Application number: 14801266.9
(22) Date of filing: 13.06.2014
(51) Int. Cl.: H04B 10/073

(54) **OPTICAL MODULE IDENTIFICATION METHOD AND DEVICE**

(30) Priority: 01.11.2013 CN 201310534190
(71) Applicant: ZTE Corporation, Shenzhen, Guangdong 518057 (CN)
(72) Inventor: QIU, Bing, Shenzhen Guangdong 518057 (CN)
(74) Representative: Novagraaf Technologies
(86) International application number: PCT/CN2014/079884
(87) International publication number: WO 2014/187422

(57) **Abstract**

The embodiment of the present disclosure discloses an optical transceiver identification method and device. Wherein, the method includes that: an optical transceiver to be identified in multiple optical transceivers of equipment is determined; and the optical transceiver is identified based on preset authentication information in the equipment according to a preset algorithm. By the embodiment of the present disclosure, the effects of improving optical transceiver identification efficiency and reliability and facilitating management over the optical transceivers are achieved.

## Description

### Technical Field

The present disclosure relates to the field of communication, and in particular to a method and device for identifying an optical transceiver.

### Background

An optical transceiver in an optical communication product counts for much, and the quality of the optical transceiver directly influences the quality of the communication. For ensuring rights of consumers, an equipment manufacturer may select optical transceivers with high quality produced by a manufacturer with good reputation, and optical transceivers with higher quality may be identified by checking parameter information of the optical transceivers.

An existing optical transceiver identification method is mainly a manual identification manner, and when there are fewer types of optical transceivers, parameter information of the optical transceivers are manually read to judge whether a optical transceiver meets a site requirement or not. However, along with increase of types and models of optical transceivers, shortcomings of the manual identification manner become more and more obvious, mainly manifested as: low efficiency, high error rate and disadvantage in management of an equipment manufacturer on the optical transceivers. Therefore, there is a need for a convenient, effective and high-reliability method for identifying the optical transceiver.

For the problems of low efficiency, high error rate and disadvantage in management of an equipment manufacturer on the optical transceivers when a manual optical transceiver identification manner is adopted in a related art, there is yet no effective solution.

### Summary

The embodiment of the present disclosure provides a method and device for identifying an optical transceiver, so as to at least solve the problems of low efficiency, high error rate and disadvantage in management of an equipment manufacturer on the optical transceivers when a manual optical transceiver identification manner is adopted in a related art.

According to one aspect of the embodiment of the present disclosure, a method for identifying an optical transceiver is provided, including: determining, from multiple optical transceivers of equipment, an optical transceiver to be identified; and identifying the optical transceiver based on preset authentication information in the equipment according to a preset algorithm.

In an example embodiment of the present disclosure, determining, from the multiple optical transceivers of the equipment, the optical transceiver to be identified includes: judging whether there is an optical transceiver of which in-site state information changes among all the multiple optical transceivers; and determining the optical transceiver of which the in-site state information changes as the optical transceiver to be identified when a judgment result is that there is the optical transceiver of which the state information changes among all the multiple optical transceivers.

In an example embodiment of the present disclosure, judging whether there is the optical transceiver of which the in-site state information changes among all the multiple optical transceivers includes: acquiring first in-site information of a current optical transceiver from the equipment; comparing the first in-site information with second in-site information which is pre-stored; and determining that the in-site state information of the current optical transceiver has changed when a comparison result is that the first in-site information is consistent with the second in-site information which is pre-stored.

In an example embodiment of the present disclosure, when the comparison result is that the first in-site information is inconsistent with the second in-site information which is pre-stored, further including: judging whether the current optical transceiver is a last optical transceiver in the multiple optical transceivers or not; continuing performing an in-site information comparison operation on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, ending a traversing operation on all the multiple optical transceivers, and restarting a flow of determining the optical transceiver to be identified after a preset time interval.

In an example embodiment of the present disclosure, before identifying the optical transceiver according to the preset authentication information in the equipment and the preset algorithm, further including: reading the preset authentication information from an optical transceiver register preset by a manufacturer of the equipment.

In an example embodiment of the present disclosure, wherein the multiple optical transceivers consist of all optical transceivers of the equipment.

According to other aspect of the present disclosure, an optical transceiver identification device is provided, including: a determining component, configured to determine, from multiple optical transceivers of equipment, an optical transceiver to be identified; and an identifying component, configured to identify the optical transceiver based on preset authentication information in the equipment according to a preset algorithm.

In an example embodiment of the present disclosure, the determining component includes: a judging component, configured to judge whether there is an optical transceiver of which in-site state information changes among all the multiple optical transceivers; and determine the optical transceiver of which the in-site state information changes as the optical transceiver to be identified when a judgment result is that there is the optical transceiver of which the state information changes among all the multiple optical transceivers.

In an example embodiment of the present disclosure, the judging component includes: an acquiring element, configured to acquire first in-site information of a current optical transceiver from the equipment; a comparing element, configured to compare the first in-site information with second in-site information which is pre-stored; and a determining element, configured to determine that the in-site state information of the current optical transceiver has changed when a comparison result is that the first in-site information is consistent with the second in-site information which is pre-stored.

In an example embodiment of the present disclosure, the judging component further includes: a processing element, configured to, when the comparison result is that the first in-site information is inconsistent with the second in-site information which is pre-stored, judge whether the current optical transceiver is a last optical transceiver in the multiple optical transceivers or not; continue performing an in-site information comparison operation on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, end a traversing operation on all the multiple optical transceivers, and restart a flow of determining the optical transceiver to be identified after a preset time interval.

In an example embodiment of the present disclosure, further including: a reading component, configured to read the preset authentication information from an optical transceiver register preset by a manufacturer of the equipment.

In an example embodiment of the present disclosure, the multiple optical transceivers consist of all optical transceivers of the equipment.

According to the embodiment of the present disclosure, a manner of automatically identifying the optical transceiver to be identified according to the preset authentication information and the preset algorithm is adopted, so that the problems of low efficiency, high error rate and disadvantage in management of an equipment manufacturer on the optical transceivers when a manual optical transceiver identification manner is adopted in a related art are solved, and the effects of improving efficiency of identifying the optical transceiver and reliability and facilitating management on the optical transceivers are achieved.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of the method for identifying the optical transceiver according to an embodiment of the present disclosure;
Fig. 2 is a structure block diagram of the device for identifying the optical transceiver according to an embodiment of the present disclosure;
Fig. 3 is a structure block diagram of an example device for identifying the optical transceiver according to an embodiment of the present disclosure; and
Fig. 4 is a diagram of a processing process for identifying the optical transceiver according to an example embodiment of the present disclosure.

### Detailed Description of the Embodiments

It is important to note that embodiments in the present disclosure and characteristics in the embodiments may be combined under the condition of no conflicts. The present disclosure will be described below with reference to the drawings and the embodiments in detail.

The embodiment of the present disclosure provides a method and device for identifying an optical transceiver. Implementation of the embodiment may well overcome shortcomings of the manual method for identifying the optical transceivers: first, the optical transceivers are identified through software, so that high efficiency and high reliability are ensured; and second, the optical transceivers may be conveniently managed by an equipment manufacturer through written authentication information.

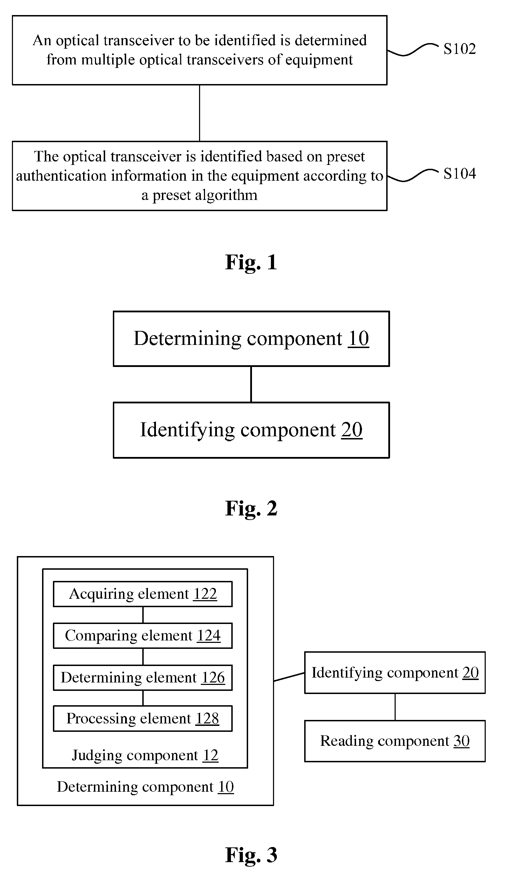

The embodiment provides a method for identifying an optical transceiver. Fig. 1 is a flowchart of the method for identifying the optical transceiver according to an embodiment of the present disclosure, and as shown in Fig. 1, the method mainly includes the following steps (Step 102 to Step 104):
Step 102: an optical transceiver to be identified is determined from multiple optical transceivers of equipment; and
Step 104: the optical transceiver is identified based on preset authentication information in the equipment according to a preset algorithm.

By the steps, the problems of low efficiency, high error rate and disadvantage in management of an equipment manufacturer on the optical transceivers when a manual optical transceiver identification manner is adopted in a related art may be well solved, and in such an automatic manner for identifying the optical transceiver, the optical transceiver may be identified automatically and intelligently, and control and management on the optical transceivers may be implemented more efficiently.

In the embodiment, Step 102 may be implemented in a manner as follows: whether there is an optical transceiver of which in-site state information changes among all the multiple optical transceivers is judged; and the optical transceiver of which the in-site state information changes is determined as the optical transceiver to be identified when a judgment result is that there is the optical transceiver of which the state information changes among all the multiple optical transceivers.

In the embodiment, the step that whether there is the optical transceiver of which the in-site state information changes among all the multiple optical transceivers is judged may optionally be implemented in a manner as follows: first in-site information of a current optical transceiver is acquired from the equipment; the first in-site information is compared with second in-site information which is pre-stored; and it is determined that the in-site state information of the current optical transceiver has changed when a comparison result is that the first in-site information is consistent with the second in-site information which is pre-stored.

In the embodiment, when the comparison result is that the first in-site information is inconsistent with the second in-site information which is pre-stored, the method may further include that: whether the current optical transceiver is a last optical transceiver in the multiple optical transceivers or not is judged; an in-site information comparison operation is continuously performed on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, a traversing operation on all the multiple optical transceivers is ended, and a flow of determining the optical transceiver to be identified is restarted after a preset time interval.

In the embodiment, before Step 104 is executed, the method may further include that: the preset authentication information is read from an optical transceiver register preset by a manufacturer of the equipment.

Optionally, the multiple optical transceivers consist of all optical transceivers of the equipment.

By the optical transceiver identification method, optical transceiver information identification efficiency and reliability may be improved, an unknown risk caused by the manual method for identifying the optical transceivers may be lowered, and management of the equipment manufacturer on the optical transceivers may be facilitated.

The embodiment provides a device for identifying an optical transceiver, which is configured to implement the method for identifying the optical transceiver provided by the embodiment. Fig. 2 is a structure block diagram of the device for identifying the optical transceiver according to an embodiment of the present disclosure, and as shown in Fig. 2, the device includes: a determining component 10 and an identifying component 20, wherein the determining component 10 is configured to determine, from multiple optical transceivers of equipment, an optical transceiver to be identified; and the identifying component 20 is connected to the determining component 10 and configured to identify the optical transceiver based on preset authentication information in the equipment according to a preset algorithm.

Fig. 3 is a structure block diagram of a example device for identifying the optical transceiver according to an embodiment of the present disclosure, and as shown in Fig. 3, the determining component 10 may include: a judging component 12, configured to judge whether there is an optical transceiver of which in-site state information changes among the multiple optical transceivers; and determine the optical transceiver of which the in-site state information changes as the optical transceiver to be identified when a judgment result is that there is the optical transceiver of which the state information changes among all the multiple optical transceivers.

In the example device for identifying the optical transceiver, the judging component 12 includes: an acquiring element 122, configured to acquire first in-site information of a current optical transceiver from the equipment; a comparing element 124, configured to compare the first in-site information with second in-site information which is pre-stored; and a determining element 126, configured to determine that the in-site state information of the current optical transceiver has changed when a comparison result is that the first in-site information is consistent with the second in-site information which is pre-stored.

Optionally, the judging component 12 may further include: a processing element 128, configured to, when the comparison result is that the first in-site information is inconsistent with the second in-site information which is pre-stored, judge whether the current optical transceiver is a last optical transceiver in the multiple optical transceivers or not; continue performing an in-site information comparison operation on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, end a traversing operation on all the multiple optical transceivers, and restart a flow of determining the optical transceiver to be identified after a preset time interval.

The example device for identifying the optical transceiver may further include: a reading component 30, connected between the determining component 10 and the identifying component 20 and configured to read the preset authentication information from an optical transceiver register preset by a manufacturer of the equipment.

Optionally, the multiple optical transceivers consist of all optical transceivers of the equipment.

According to the method and device for identifying the optical transceiver provided by the embodiment, a manner of automatically identifying the optical transceiver to be identified according to the preset authentication information and the preset algorithm is adopted, so that the problems of low efficiency, high error rate and disadvantage in management of an equipment manufacturer on the optical transceivers when a manual optical transceiver identification manner is adopted in a related art are solved, and the effects of improving optical transceiver identification efficiency and reliability and facilitating management on the optical transceivers are achieved.

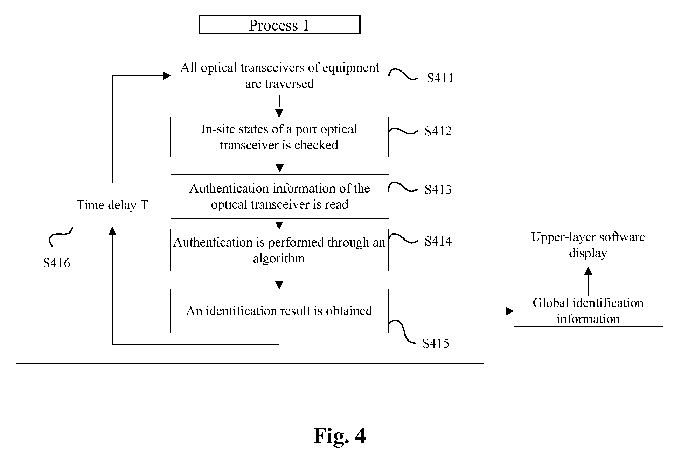

An implementation process of the method for identifying the optical transceiver and the device for identifying the optical transceiver provided by the embodiment and the example embodiment will be described below with reference to Fig. 4 in more detail.

Fig. 4 is a diagram of a processing process for identifying an optical transceiver according to an example embodiment of the present disclosure, and as shown in Fig. 4, the process includes the following steps:
Step 411: a function of process 1 is to traverse multiple optical transceivers of equipment, acquire state change information of the optical transceivers and perform an authentication operation on the optical transceivers which the state change information changes;
Step 412: in-site information of an optical transceiver is read from hardware, and is compared with in-site information stored in a software table of the optical transceiver to judge whether the in-site information of the optical transceiver changes or not; when an in-site state information of the optical transceiver changes, Step 413 is executed; when the in-site state information of the optical transceiver does not change, whether the optical transceiver is the last optical transceiver of the traversed equipment or not is judged, and when the optical transceiver is not the last optical transceiver, Step 412 is continuously executed; when the optical transceiver is the last optical transceiver, Step 416 is executed;
Step 413: authentication information of the optical transceiver is read from an optical transceiver register preset by a manufacturer of the equipment and stored into the software table of the optical transceiver, and Step 414 is executed;
Step 414: the authentication information is read from the software table of the optical transceiver, the optical transceiver is identified according to an algorithm preset by the manufacturer of the equipment, and Step 415 is executed;
Step 415: an identification result obtained in Step 414 is stored in the software table of the optical transceiver; and
Step 416: when all the optical transceivers are traversed, Step 411 is re-executed after a time delay T.

In the implementation solution provided by the example embodiment, the manufacturer of the equipment may write the authentication information to fixed addresses of the optical transceivers through the internally preset algorithm; and when the optical transceivers are identified, information of the addresses may be read through software and verified whether to meet the preset algorithm or not, it is indicated that the optical transceivers are authenticated by the manufacturer and their quality is reliable when the preset algorithm is met, and on the contrary, the optical transceivers are unauthenticated optical transceivers, and it is risky to use the unauthenticated optical transceivers.

It is important to note that each of the abovementioned components may be implemented through hardware. For example, a process includes each of the abovementioned components, or, each of the abovementioned components is located in a processor.

In another embodiment, software is further provided, which is configured to execute the technical solutions described in the abovementioned embodiment and preferred implementation mode.

In another embodiment, a storage medium is further provided, in which the abovementioned software is stored, the storage medium including, but not limited to: a compact disk, a floppy disk, a hard disk, an erasable memory and the like.

From the above, it can be seen that the embodiment of the present disclosure achieves the following technical effects: a manner of automatically identifying the optical transceiver to be identified according to the preset authentication information and the preset algorithm is adopted, so that the problems of low efficiency, high error rate and disadvantage of the manual optical transceiver identification manner in management of the equipment manufacturer over the optical transceivers in the related technology are solved, and the effects of improving optical transceiver identification efficiency and reliability and facilitating management over the optical transceivers are achieved.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences consistent with the sequences here under some circumstances, or the components or steps may form each integrated circuit component respectively, or multiple components or steps therein can form a single integrated circuit component for implementation. As a consequence, the present disclosure is not limited to any specific hardware and software combination.

The above is only the preferred embodiment of the present disclosure and not intended to limit the present disclosure. For those skilled in the art, the prevent invention may have various modifications and variations. Any modification, equivalent replacement, improvement and the like made within the spirit and principle of the present disclosure shall fall within the scope of protection of the present disclosure.

### Industrial Applicability

The embodiment of the present disclosure may be applied to the field of communication, and in particular to the field of optical communication, and in the manner of automatically identifying the optical transceiver to be identified according to the preset authentication information and the preset algorithm is adopted, the problems of low efficiency, high error rate and disadvantage in management of an equipment manufacturer on the optical transceivers when a manual optical transceiver identification manner is adopted in a related art may be solved, optical transceiver identification efficiency and reliability may be improved, and management on the optical transceivers may be facilitated.

## Claims

1. A method for identifying an optical transceiver, comprising:
determining, from multiple optical transceivers of equipment, an optical transceiver to be identified; and
identifying the optical transceiver based on preset authentication information in the equipment according to a preset algorithm.

2. The method as claimed in claim 1, wherein determining, from the multiple optical transceivers of the equipment, the optical transceiver to be identified comprises:
judging whether there is an optical transceiver of which in-site state information changes among all the multiple optical transceivers; and determining the optical transceiver of which the in-site state information changes as the optical transceiver to be identified when a judgment result is that there is the optical transceiver of which the state information changes among all the multiple optical transceivers.

3. The method as claimed in claim 2, wherein judging whether there is the optical transceiver of which the in-site state information changes among all the multiple optical transceivers comprises:
acquiring first in-site information of a current optical transceiver from the equipment; comparing the first in-site information with second in-site information which is pre-stored; and determining that the in-site state information of the current optical transceiver has changed when a comparison result is that the first in-site information is consistent with the second in-site information which is pre-stored.

4. The method as claimed in claim 3, when the comparison result is that the first in-site information is inconsistent with the second in-site information which is pre-stored, further comprising:
judging whether the current optical transceiver is a last optical transceiver in the multiple optical transceivers or not; continuing performing an in-site information comparison operation on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, ending a traversing operation on all the multiple optical transceivers, and restarting a flow of determining the optical transceiver to be identified after a preset time interval.

5. The method as claimed in any one of claims 1 to 4, before identifying the optical transceiver according to the preset authentication information in the equipment and the preset algorithm, further comprising:
reading the preset authentication information from an optical transceiver register preset by a manufacturer of the equipment.

6. The method as claimed in any one of claims 1 to 4, wherein the multiple optical transceivers consist of all optical transceivers of the equipment.

7. A device for identifying an optical transceiver, comprising:
a determining component, configured to determine, from multiple optical transceivers of equipment, an optical transceiver to be identified; and
an identifying component, configured to identify the optical transceiver based on preset authentication information in the equipment according to a preset algorithm.

8. The device as claimed in claim 7, wherein the determining component comprises:
a judging component, configured to judge whether there is an optical transceiver of which in-site state information changes among all the multiple optical transceivers; and determine the optical transceiver of which the in-site state information changes as the optical transceiver to be identified when a judgment result is that there is the optical transceiver of which the state information changes among all the multiple optical transceivers.

9. The device as claimed in claim 8, wherein the judging component comprises:
an acquiring element, configured to acquire first in-site information of a current optical transceiver from the equipment;
a comparing element, configured to compare the first in-site information with second in-site information which is pre-stored; and
a determining element, configured to determine that the in-site state information of the current optical transceiver has changed when a comparison result is that the first in-site information is consistent with the second in-site information which is pre-stored.

10. The device as claimed in claim 9, wherein the judging component further comprises:
a processing element, configured to, when the comparison result is that the first in-site information is inconsistent with the second in-site information which is pre-stored, judge whether the current optical transceiver is a last optical transceiver in the multiple optical transceivers or not; continue performing an in-site information comparison operation on a traversed optical transceiver placed next the current optical transceiver when a judgment result is that the current optical transceiver is not the last optical transceiver in the multiple optical transceivers; and when the judgment result is that the current optical transceiver is the last optical transceiver in the multiple optical transceivers, end a traversing operation on all the multiple optical transceivers, and restart a flow of determining the optical transceiver to be identified after a preset time interval.

11. The device as claimed in any one of claims 7 to 10, further comprising:
a reading component, configured to read the preset authentication information from an optical transceiver register preset by a manufacturer of the equipment.

12. The device according to any one of claims 7 to 10, wherein the multiple optical transceivers consist of all optical transceivers of the equipment.
